Europäisches Patentamt

European Patent Office

Office européen des brevets

(19)

(11) Numéro de publication : **0 106 712**
**B1**

(12) # FASCICULE DE BREVET EUROPÉEN

(45) Date de publication du fascicule du brevet :
17.07.85

(51) Int. Cl.⁴ : **F 23 D 14/32, F 23 Q 3/00**

(21) Numéro de dépôt : **83401614.9**

(22) Date de dépôt : **04.08.83**

(54) **Procédé et dispositif d'allumage électrique d'un brûleur oxycombustible.**

(30) Priorité : **25.08.82 FR 8214566**

(43) Date de publication de la demande :
**25.04.84 Bulletin 84/17**

(45) Mention de la délivrance du brevet :
**17.07.85 Bulletin 85/29**

(84) Etats contractants désignés :
**AT BE CH DE FR GB IT LI LU NL SE**

(56) Documents cités :
**DE-A- 1 915 097**
**DE-A- 2 336 693**
**FR-A- 1 416 121**
**FR-A- 1 482 582**
**GB-A- 1 143 117**
**US-A- 3 361 185**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur : **Guillaume, Paul**
**175 rue Hartmann**
**F-94200 Ivry-sur-Seine (FR)**
Inventeur : **Vezin, Luc**
**5 les Longues Raies**
**F-95330 Domont (FR)**
Inventeur : **Dubi, Bernard**
**22 avenue de Provence**
**F-78140 Velizy Villacoubley (FR)**

(74) Mandataire : **Maurette, Hélène et al**
**L'Air Liquide Société Anonyme pour l'Etude et l'Exploitation des Procédés Georges Claude 75, quai d'Orsay**
**F-75321 Paris Cedex 07 (FR)**

Jouve, 18, rue St-Denis, 75001 Paris, France

EP 0 106 712 B1

## Description

L'invention concerne essentiellement un procédé d'allumage électrique d'un brûleur oxycombustible.

Jusqu'ici, l'allumage électrique des brûleurs aérocombustibles, qui consiste à utiliser une décharge à haute tension dans le courant gazeux issu de ces brûleurs, n'était pas applicable aux brûleurs oxycombustibles. En effet, la température et le niveau d'oxydation dans une flamme oxycombustible sont tels que les électrodes utilisées pour cette décharge sont rapidement détériorées par fusion et/ou oxycoupage. L'allumage des brûleurs oxycombustibles n'était donc possible qu'avec des appareils accessoires tels que des brûleurs pilotes ou des braséros ou encore, dans certains cas particuliers, par exemple par l'utilisation de l'arc d'un four à arc.

On sait que les brûleurs oxycombustibles sont alimentés séparément en oxygène et en un combustible gazeux et que les jets qui en émergent se mélangent à une certaine distance en avant de leur face frontale, dans une zone voisine de la stœchiométrie, ces jets donnant naissance, entre eux et dans la région située entre ladite zone et ladite face frontale, à des courants de recirculation qui ramènent une fraction des gaz brûlés vers le brûleur. On obtient ainsi, entre les deux jets issus du brûleur, un mélange de gaz appauvri en oxygène et en combustible dont la composition, c'est-à-dire la teneur relative en oxygène et combustible, varie localement en fonction de la géométrie du brûleur, c'est-à-dire de la position et de la répartition des orifices d'où sont issus les jets.

La présente invention a pour but de rendre possible l'allumage électrique des brûleurs oxycombustibles, c'est-à-dire d'éviter les inconvénients auxquels s'était heurtée cette technique jusqu'ici et elle propose, à cet effet, un procédé selon lequel on provoque une étincelle électrique d'allumage dans une région des courants de recirculation précités dont la teneur relative en oxygène et combustible se trouve entre les limites inférieure et supérieure d'inflammabilité, au voisinage de ladite limite supérieure.

Il est évident que le fait de choisir, pour provoquer l'étincelle, une région appauvrie en combustible et oxygène, tout en restant bien entendu entre les limites d'inflammabilité, a pour conséquence de diminuer les contraintes thermiques et les contraintes d'oxydation auxquelles sont soumises les électrodes.

Le fait de se placer au voisinage de la limite supérieure d'inflammabilité, c'est-à-dire la plus riche en combustible donc la plus réductrice, a pour conséquence de mieux protéger les électrodes contre les effets de l'oxydation.

Selon une autre caractéristique de l'invention, on envoie un jet additionnel de combustible dans la zone d'allumage.

Ce combustible additionnel a pour effet de déplacer la composition des courants de recirculation vers les teneurs riches en combustible.

Dans le cas où le combustible est du gaz naturel, on provoque l'étincelle électrique d'allumage au voisinage de la limite supérieure qui est de 60 % de gaz naturel et 40 % d'oxygène.

L'invention propose également, pour la mise en œuvre du procédé précité, un brûleur oxycombustible du type comportant des moyens d'adduction d'oxygène et des moyens d'adduction de combustible et dans lequel les jets d'oxygène et de combustible se rencontrent en donnant naissance à des courants de recirculation ayant une teneur relative en oxygène et en combustible localement variable.

Le brûleur selon l'invention comporte des moyens pour créer une différence de potentiel électrique, lesdits moyens étant disposés dans une région desdits courants de recirculation qui se trouvent entre les limites inférieure et supérieure d'inflammabilité, du mélange résultant, mais proche de ladite limite supérieure.

Toujours selon l'invention, les moyens précités comportent au moins une électrode reliée aux bornes d'une source de tension.

D'autres caractéristiques et avantages de l'invention apparaîtront au cours de la description qui va suivre.

Dans les dessins annexés donnés uniquement à titre d'exemple non limitatif :

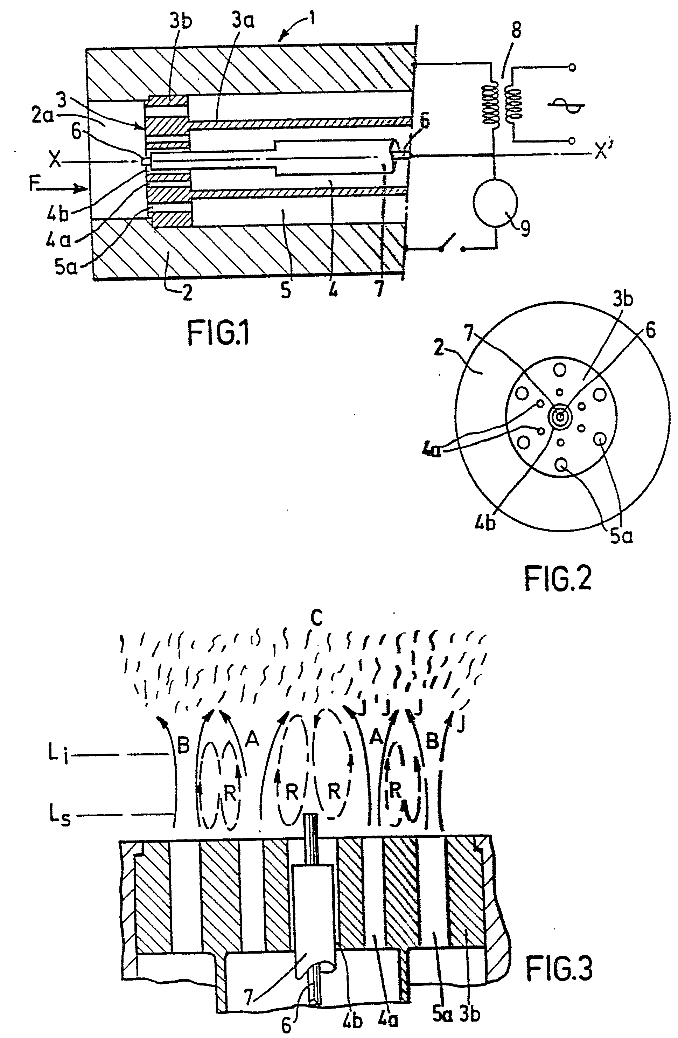

la figure 1 est une vue schématique partielle et en coupe axiale d'un brûleur oxycombustible selon l'invention ;

la figure 2 est une vue en bout dudit brûleur selon la flèche F de la figure 1 ;

la figure 3 est une vue partielle à plus grande échelle du brûleur de la figure 1 montrant les courants de recirculation.

Selon le mode de réalisation représenté, le brûleur selon l'invention, désigné d'une façon générale par la référence 1, comporte un corps creux externe (2) de révolution et d'axe (X,X') et une structure interne (3) à symétrie axiale logée dans ledit corps (2), coaxialement à ce dernier. La structure (3) présente une partie cylindrique (3a) et un élément (3b) en forme de disque. La structure (3) est positionnée à l'intérieur du corps (2) de façon à laisser subsister, en avant de l'élément (3b), une chambre frontale (2a) ouverte à l'extérieur. La partie cylindrique (3a) de la structure interne (3) comporte un conduit central (4) alimenté en combustible et délimite, avec le corps (2), un conduit annulaire (5) alimenté en oxygène. Des orifices (4a) et (5a) traversant l'élément (3b) font communiquer ces conduits (4) et (5) respectivement avec la chambre (2a).

Une électrode (6), par exemple en cuivre, et munie d'un isolant (7), est logée à l'intérieur de la partie cylindrique (3a) de la structure interne (3) coaxialement à (X,X'). Cette électrode traverse l'élément (3b) muni à cet effet d'un passage (4b), de façon que sa pointe (bien entendu dénudée) émerge légèrement au-delà du plan frontal de l'élément (3b). Le passage (4b) peut présenter avantageusement un diamètre légèrement supérieur à celui de l'électrode (6) (enrobée de son isolant (7)). Un générateur de tension (8), par exemple un transformateur, est prévu pour établir une différence de potentiel entre l'électrode (6) et le brûleur lui-même c'est-à-dire entre l'électrode (6) d'une part et le corps creux (2) et l'élément interne (3) d'autre part. Enfin un détecteur (9) de courant d'ionisation pouvant détecter des courants entre 5 et 20 milliampères par exemple est branché entre l'électrode (6) et le corps du brûleur.

On a représenté sur la figure 3, les jets J issus des orifices (4a) (hydrocarbure) et (5a) (oxygène). Ces jets déterminent au nez du brûleur des régions A riches en hydrocarbure et B riches en oxygène, puis se mélangent dans une région C extérieure dans laquelle se fait la combustion. Les jets J induisent des turbulences qui ramènent vers le nez du brûleur une fraction des gaz partiellement brûlés, formant des courants de recirculation R qui constituent un mélange pauvre en oxygène et combustible dont la teneur relative en ces deux composants varie localement, c'est-à-dire le long desdits courants. On sait qu'il existe une zone d'inflammabilité délimitée par deux limites supérieure et inférieure $L_s$ et $L_i$ hors de laquelle on ne peut enflammer le mélange, donc allumer le brûleur. L'électrode (6) est disposée de façon que son extrémité se trouve dans les courants de recirculation R mais à l'intérieur de la zone d'inflammabilité du mélange oxygène — combustible, au voisinage de la limite supérieure $L_s$ de cette zone. Ceci est facilité par le fait qu'avec l'oxygène pur comme comburant, ladite zone comporte une limite inférieure pratiquement stable mais une limite supérieure qui s'élève considérablement.

Il convient de remarquer, de plus, que la composition des gaz de recirculation est très éloignée de la composition stœchiométrique, donc que la température de la zone dans laquelle baigne l'électrode est très éloignée de la température adiabatique de combustion oxycombustible.

Par ailleurs, le fait que seule l'extrémité de l'électrode soit soumise à un échauffement, échauffement qui est d'ailleurs limité par la conduction à travers l'électrode elle-même, a pour effet de diminuer considérablement les contraintes thermiques et d'oxydation qui s'exercent sur ladite électrode.

L'injection autour de l'électrode d'une faible quantité de combustible permet de déplacer encore l'environnement gazeux de l'extrémité de l'électrode vers les teneurs pauvres en oxygène.

Pour allumer le brûleur, il suffit de fermer le circuit d'alimentation du transformateur (8), ce qui entraîne la formation d'une étincelle entre l'électrode et le corps du brûleur.

Le détecteur d'ionisation (9) permet ensuite de vérifier la présence de la flamme.

Le brûleur selon l'invention peut être alimenté en diverses sortes de combustibles gazeux tels que le méthane, le propane, le butane ou encore l'hydrogène.

A titre d'exemple, un brûleur réalisé selon l'invention a les caractéristiques suivantes :

— puissance nominale 0,1 mw.

— 6 trous périphériques (5a) pour l'oxygène, avec un débit total d'oxygène de 18 $Nm^3$/h et une vitesse de sortie d'environ 100 m/seconde.

— 6 trous (4a) pour le gaz naturel avec un débit total de gaz naturel de 9 $Nm^3$/h et une vitesse de sortie d'environ 50 m/seconde.

— électrode en cuivre dépassant la face frontale du brûleur de 3 mm et ayant un diamètre de 3 mm.

Le débit de gaz naturel autour de l'électrode est d'environ 1 $Nm^3$/h.

La composition du mélange gazeux avant allumage, au voisinage de la pointe de l'électrode, est environ 50 % de gaz naturel, 50 % d'oxygène en volume. La température adiabatique de combustion de ce mélange est de 2 450 °C.

Dès qu'éclate l'étincelle, le mélange précité au voisinage de la pointe de l'électrode s'enflamme en donnant des produits de combustion constitués d'environ 30 % de CO, 3 % de $CO_2$, 37 % d'$H_2$ et 30 % $H_2O$. Ensuite, la combustion s'établit sur tout le front du brûleur et la recirculation des produits de combustion appauvrit notablement en oxygène la composition du mélange gazeux au voisinage de la pointe de l'électrode et la température adiabatique de combustion de ce mélange passe de 2 450 °C à une température des produits de combustion inférieure à 1 800 °C avec génération, au voisinage de l'électrode, d'une atmosphère très réductrice, formée principalement de CO et de $H_2$, les proportions de ces deux constituants étant pratiquement impossibles à déterminer, la composition de l'atmosphère en question étant fonction de l'environnement dans lequel fonctionne le brûleur.

Dans ces conditions, en régime permanent, la température de la pointe de l'électrode ne dépasse pas 350 °C.

On pourrait apporter au mode de réalisation décrit et représenté diverses variantes sans pour autant sortir du cadre de l'invention. C'est ainsi que l'électrode pourrait ne pas être disposée coaxialement au corps du brûleur ou encore que ce dernier pourrait ne pas présenter de symétrie axiale.

**Revendications**

1. Procédé d'allumage d'un brûleur oxycombustible dans lequel les jets d'oxygène et de combustible se mélangent, en donnant naissance à des courants de recirculation ayant une teneur relative en oxygène et combustible localement variable, caractérisé en ce que l'on provoque une étincelle électrique d'allumage dans une région desdits courants de recirculation dont la teneur relative en oxygène et combustible se trouve entre les limites inférieure et supérieure d'inflammabilité, au voisinage de ladite limite supérieure.

2. Procédé selon la revendication 1, caractérisé en ce que l'on envoie un jet additionnel de combustible dans la zone d'allumage.

3. Procédé selon la revendication 1, caractérisé en ce que dans le cas où le combustible est du gaz naturel on provoque l'étincelle électrique d'allumage au voisinage de la limite supérieure $L_3$ qui est de 60 % de gaz naturel et de 40 % d'oxygène.

4. Brûleur oxycombustible du type comportant des moyens d'adduction d'oxygène (5, 5a) et des moyens d'adduction de combustible (4, 4a) et dans lequel les jets d'oxygène et de combustible se rencontrent en donnant naissance à des courants de recirculation ayant une teneur relative en oxygène et combustible localement variable, caractérisé en ce qu'il comporte des moyens (6) pour créer une différence de potentiel électrique, lesdits moyens étant disposés dans une région desdits courants de recirculation qui se trouve entre les limites inférieure et supérieure d'inflammabilité du mélange résultant, mais proche de ladite limite supérieure.

5. Brûleur selon la revendication 4, caractérisé en ce que les moyens précités comportent au moins une électrode (6) reliée aux bornes d'une source de tension (8).

6. Brûleur selon la revendication 5, caractérisé en ce que les moyens précités comportent une seconde électrode constituée par le corps (2) du brûleur lui-même.

7. Brûleur selon la revendication 5, caractérisé en ce que dans le cas d'un brûleur à symétrie axiale l'électrode (6) est disposée coaxialement audit brûleur.

8. Brûleur selon la revendication 6, caractérisé en ce que des moyens d'adduction complémentaires de combustible (4b) sont prévus qui débouchent au voisinage immédiat de l'électrode (6).

9. Brûleur selon les revendications 1 et 8, caractérisé en ce que les moyens d'adduction (4b) précités sont constitués par une ouverture annulaire entourant l'électrode (6).

10. Brûleur selon la revendication 4, caractérisé en ce que les moyens cités (6, 2) prévus pour créer une différence de potentiel électrique, sont reliés aux bornes d'un détecteur de tension (9).

## Claims

1. Method for the ignition of an oxyfuel burner in which the jets of oxygen and fuel are mixed, generating recirculation streams having a relativ content of oxygen and fuel locally variable, characterized in that an electrical ignition spark is produced in a region of said recirculation streams, the relativ content of oxygen and fuel of which is between the lower and upper limits of inflammability near said upper limit.

2. Method according to claim 1, characterized in that an additional jet of fuel is sent into the ignition zone.

3. Method according to claim 1, characterized in that in the case where the fuel is natural gas the electrical ignition spark is produced near the upper limit $L_3$ which is 60 percent of natural gas and 40 percent of oxygen.

4. Oxyfuel burner of the type comprising means of oxygen addition (5, 5a) and means of fuel addition (4, 4a) and in which the oxygen and fuel jets meet, generating recirculation streams having a locally variable relativ content of oxygen and fuel, characterized in that it comprises means (6) for forcing an electrical potential difference, said means being disposed in a region of said recirculation streams which is between the lower and upper limits of inflammability of the resultant mixture by near the said upper limit.

5. Burner according to claim 4, characterized in that the said means comprise at least one electrode (6) connected with terminals of a voltage source (8).

6. Burner according to claim 5, characterized in that the said means comprise a second electrode consisting of the body (2) of the burner itself.

7. Burner according to claim 5, characterized in that in the case of an axial symmetric burner the electrode (6) is disposed coaxially with said burner.

8. Burner according to claim 6, characterized in that additional means of fuel addition (4b) are provided which terminate in immediate vicinity of the electrode (6).

9. Burner according to the claims 1 and 8, characterized in that the said means of addition (4b) consist of an annular opening surrounding the electrode (6).

10. Burner according to claim 4, characterized in that the cited means (6, 2) provided for causing an electrical potential difference are connected with terminals of a voltage detector (9).

## Patentansprüche

1. Verfahren zur Zündung eines Sauerstoffbrennstoff-Brenners, in welchem die Sauerstoff- und Brennstoffstrahlen sich vermischen, wobei sie Rezirkulationsströme erzeugen, die einen örtlich veränderlichen Relativgehalt an Sauerstoff und Brennstoff haben, dadurch gekennzeichnet, daß man einen elektrischen Zündungsfunken in einem Bereich dieser Rezirkulationsströme erzeugt, dessen Relativgehalt an Sauerstoff und Brennstoff sich zwischen den unteren und oberen Entzündbarkeitsgrenzen nahe der oberen Grenze befindet.

2. Verfahren nach Anspruch 1, dadurch gekennzeichnet, daß man einen zusätzlichen Brennstoffstrahl in die Zündungszone schickt.

3. Verfahren nach Anspruch 1, dadurch gekennzeichnet, daß man dann, wenn der Brennstoff Naturgas ist, den elektrischen Zündungsfunken nahe der oberen Grenze $L_3$ erzeugt, die bei 60 % Naturgas und 40 % Sauerstoff liegt.

4. Sauerstoffbrennstoff-Brenner des Typs, der Mittel zur Sauerstoffzufuhr (5, 5a) und Mittel zur Brennstoffzufuhr (4, 4a) besitzt und in welchem die Sauerstoff- und Brennstoffstrahlen aufeinandertreffen, wobei sie Rezirkulationsströme erzeugen, die einen örtlich veränderlichen Relativgehalt an Sauerstoff und Brennstoff haben, dadurch gekennzeichnet, daß er Mittel (6) zur Erzeugung einer elektrischen Potentialdifferenz besitzt, wobei diese Mittel in einem Bereich dieser Rezirkulationsströme angeordnet sind, der sich zwischen der unteren und oberen Entzündbarkeitsgrenze des resultierenden Gemisches, aber nahe der oberen Grenze sind befindet.

5. Brenner nach Anspruch 4, dadurch gekennzeichnet, daß die genannten Mittel wenigstens eine Elektrode (6) aufweisen, die mit Anschlüssen einer Spannungsquelle (8) verbunden ist.

6. Brenner nach Anspruch 5, dadurch gekennzeichnet, daß die vorgenannten Mittel eine zweite Elektrode aufweisen, die von dem Körper (2) des Brenners selbst gebildet wird.

7. Brenner nach Anspruch 5, dadurch gekennzeichnet, daß im Falle eines axialsymmetrischen Brenners die Elektrode (6) koaxial mit diesem Brenner angeordnet ist.

8. Brenner nach Anspruch 6, dadurch gekennzeichnet, daß zusätzliche Brennstoffzuführeinrichtungen (4b) vorgesehen sind, die in unmittelbare Nähe der Elektrode (6) münden.

9. Brenner nach den Ansprüchen 1 und 8, dadurch gekennzeichnet, daß die vorgenannten Zuführeinrichtungen (4b) aus einer die Elektrode (6) umgebenden Ringöffnung bestehen.

10. Brenner nach Anspruch 4, dadurch gekennzeichnet, daß die genannten Mittel (6, 2), die zur Erzeugung einer elektrischen Potentialdifferenz vorgesehen sind, mit Anschlüssen eines Spannungsfühlers (9) verbunden ist.

FIG.1

FIG.2

FIG.3